(19) **Europäisches Patentamt / European Patent Office / Office européen des brevets**

(11) **EP 2 633 899 A1**

(12) **EUROPEAN PATENT APPLICATION**
published in accordance with Art. 153(4) EPC

(43) Date of publication:
**04.09.2013 Bulletin 2013/36**

(21) Application number: **11836321.7**

(22) Date of filing: **26.10.2011**

(51) Int Cl.:
*B01D 65/06* (2006.01)      *B01D 61/58* (2006.01)
*B01D 65/02* (2006.01)      *C02F 1/44* (2006.01)

(86) International application number:
**PCT/JP2011/074639**

(87) International publication number:
**WO 2012/057188 (03.05.2012 Gazette 2012/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010  JP 2010243057**

(71) Applicant: **Toray Industries, Inc.
Tokyo 103-8666 (JP)**

(72) Inventor: **MAEDA, Tomohiro
Shiga 520-8558 (JP)**

(74) Representative: **Prüfer & Partner GbR
European Patent Attorneys
Sohnckestrasse 12
81479 München (DE)**

(54) **FRESH WATER GENERATION METHOD AND FRESH WATER GENERATION DEVICE**

(57)     In order to prevent oxidation degradation of a semipermeable membrane and biofouling growth and avoid an increase in cost due to chemicals and the like, the present invention provides a fresh water production method including membrane-filtering raw water with a microfiltration/ultrafiltration membrane module, followed by performing membrane filtration with a semipermeable membrane unit, in which the membrane filtration in the microfiltration/ultrafiltration membrane module is temporarily interrupted, chlorine agent-containing water is fed from a secondary side of the microfiltration/ultrafiltration membrane module to perform back-pressure washing of the microfiltration/ultrafiltration membrane module, thereafter, an ammoniacal compound and/or an amino group-containing compound are added to a primary side of the microfiltration/ultrafiltration membrane module, and the membrane filtration in the microfiltration/ultrafiltration membrane module is resumed.

*Fig. 1*

EP 2 633 899 A1

**Description**

TECHNICAL FIELD

The present invention relates to a fresh water production method comprising membrane-filtering raw water with a microfiltration/ultrafiltration membrane (hereinafter referred to as MF/UF membrane) module and membrane-filtering the membrane filtrate thereof with a semipermeable membrane unit provided with a reverse osmosis membrane (RO membrane) or a nanofiltration membrane (NF membrane), and a fresh water production apparatus. In particular, the present invention relates to a fresh water production method that is characterized by a washing method of the MF/UF membrane module in the above-mentioned fresh water production method, and relates to a fresh water production apparatus capable of performing the method suitably.

BACKGROUND ART

In water treatment applications such as water and sewage, and drainage treatment, a membrane filtration method for converting to clear water by separating and removing impurities in raw water with a membrane has recently grown popular. Although substances to be removed with the membrane vary depending on the kind of membrane, the substances generally include suspended substances, bacteria, protozoa and colloidal substances, in the case of the MF/UF membrane. Further, in the case of the reverse osmosis membrane (RO membrane) or the nanofiltration membrane (NF membrane) (these are hereinafter referred together to as a semipermeable membrane), the substances include soluble organic substances, viruses and ionic substances.

A method for producing clear water by filtering raw water with the MF/UF membrane and thereafter treating the filtrate with the semipermeable membrane is called an IMS process (see Non-Patent Document 1).

In the case where a filtration operation of the MF/UF membrane is performed, the deposit of fumic materials, proteins or the like on a surface or in pore diameters of the MF/UF membrane increases associated with filtration continuation, and an increase in transmembrane pressure becomes a problem.

There has therefore been put into practical use physical washing such as air washing for scraping off deposited substances on the membrane surfaces by introducing air bubbles to a primary side (feed water side) of the MF/UF membranes to vibrate the membranes, thereby bringing the membranes into contact with each other, or back-pressure washing for removing deposited substances deposited on the membrane surfaces or in the membrane pore diameters by allowing a membrane filtrate or clear water to flow with pressure to the MF/UF membranes in a direction opposite to filtration. Further, in order to more enhance a washing effect, for example, in Patent Document 1, it is disclosed to add a chlorine agent such as sodium hypochlorite to back-pressure washing water and to perform back-pressure washing. The chlorine agent has an effect of decomposing and removing organic materials such as fumic acid and microbially-derived proteins deposited on the membrane surfaces or in the membrane pores.

However, after the organic materials deposited on the surface of the MF/UF membrane have been decomposed and removed, the chlorine agent remains in a pipeline on a secondary side (filtrate side) of the MF/UF membrane module or in the module. Accordingly, high levels of the chlorine agent are often contained in the membrane filtrate immediately after resumption of filtration with the MF/UF membrane. However, for example, with respect to the semipermeable membrane provided on a downstream side of the MF/UF membrane, especially the semipermeable membrane composed of a polyamide-based membrane material, oxidation degradation of a separation function layer occurs when coming into contact with the chlorine agent. Therefore, in order to prevent the semipermeable membrane from oxidation degradation due to the chlorine agent at the time of resumption of the filtration with the MF/UF membrane, there is also performed a method of thoroughly washing out the MF/UF membrane module with raw water or the membrane filtrate to discharge the washing water to the outside of the system, or a method of adding a reducing agent such as sodium thiosulfate or sodium hydrogen sulfite to raw water to perform neutralization by reduction. For example, in Patent Document 2, there is proposed a method of periodically washing a primary side of a membrane module with a bisulfate solution as a reducing agent, and in Patent Documents 3 and 4, there is proposed a method of performing back-pressure washing with a reducing agent. However, these methods have a problem of an increase in cost due to chemicals and the like, and further, cause a decrease in the water recovery ratio, depending on the concentration of the reducing agent.

On the other hand, in the case where a filtration operation using the semipermeable membrane is performed, there is a problem of so-called biofouling in which microorganisms that have grown in raw water or metabolites thereof are deposited on a membrane surface of the semipermeable membrane, thereby causing deterioration in filtration performance or treatment performance. In order to avoid the problem of this biofouling, it has been known to add continuously or intermittently a chlorine agent such as sodium hypochlorite to semipermeable membrane feed water to perform sterilization.

However, as described above, in the semipermeable membrane, especially in the semipermeable membrane composed of the polyamide-based membrane material, chemical degradation of the separation function layer occurs when coming into contact with the chlorine agent. Therefore, for example, in Patent Document 5, there is performed a method of adding a reducing agent such as sodium thiosulfate or sodium hydrogen sulfite before the semipermeable membrane, after sterilization with a free chlorine agent, thereby performing neutralization by reduction to prevent oxidation degradation of the semipermeable membrane. However, this method cannot sufficiently inhibit growth of the microorganisms, and the semipermeable membrane is contaminated by the occurrence of the biofouling. The problem of deterioration in water permeability performance has failed to be sufficiently solved.

BACKGROUND ART DOCUMENT

PATENT DOCUMENT

Patent Document 1: JP-A-2001-79366
Patent Document 2: JP-A-2006-305444
Patent Document 3: JP-A-2008-29906
Patent Document 4: Japanese Patent No. 3380114
Patent Document 5: JP-A-59-213495

NON-PATENT DOCUMENT

Non-Patent Document 1: Hiroyuki Yamamura, "Present Situation and Future Problems of Membranes for Effective Utilization Systems of Water Resources", Membrane, vol. 28, No. 5, p. 235, The Membrane Society of Japan

SUMMARY OF THE INVENTION

PROBLEMS THAT THE INVENTION IS TO SOLVE

An object of the present invention is to provide a fresh water production method and a fresh water production apparatus, by which oxidation degradation of a semipermeable membrane and biofouling growth can be prevented, and an increase in cost due to chemicals and the like can be avoided, in a fresh water production method comprising membrane-filtering raw water with a MF/UF membrane module and membrane-filtering the membrane filtrate with a semipermeable membrane unit provided with a reverse osmosis membrane (RO membrane) or a nanofiltration membrane (NF membrane).

MEANS FOR SOLVING THE PROBLEMS

In order to solve the above-mentioned problems, the fresh water production method and the fresh water production apparatus of the present invention has any one of the following characteristics:

(1) A fresh water production method including membrane-filtering raw water with a microfiltration/ultrafiltration membrane module, followed by performing membrane filtration with a semipermeable membrane unit, in which the membrane filtration in the microfiltration/ultrafiltration membrane module is temporarily interrupted, chlorine agent-containing water is fed from a secondary side of the microfiltration/ultrafiltration membrane module to perform back-pressure washing of the microfiltration/ultrafiltration membrane module, thereafter, an ammoniacal compound and/or an amino group-containing compound are added to a primary side of the microfiltration/ultrafiltration membrane module, and the membrane filtration in the microfiltration/ultrafiltration membrane module is resumed.
(2) The fresh water production method according to (1), in which after the back-pressure washing with the chlorine agent-containing water is performed, before or at the same time as the ammoniacal compound and/or the amino group-containing compound are added to the primary side of the microfiltration/ultrafiltration membrane module, an ammoniacal compound and/or an amino group-containing compound are added to the secondary side of the microfiltration/ultrafiltration membrane module, and the membrane filtration in the microfiltration/ultrafiltration membrane module is resumed.
(3) The fresh water production method according to (1) or (2), in which after the back-pressure washing with the chlorine agent-containing water is performed, and before the ammoniacal compound and/or the amino group-containing compound are added to the primary or secondary side of the microfiltration/ultrafiltration membrane module, the microfiltration/ultrafiltration membrane module is subjected to back-pressure washing with a membrane filtrate.
(4) The fresh water production method according to any one of (1) to (3), in which after the back-pressure washing with the chlorine agent-containing water is performed, the chlorine agent-containing water is subsequently held in the microfiltration/ultrafiltration membrane module for a predetermined period of time.

(5) The fresh water production method according to any one of (1) to (4), in which air washing is performed during, before or after performing the back-pressure washing with the chlorine agent-containing water, or at least at one time during the period of time for which the chlorine agent-containing water is held in the microfiltration/ultrafiltration membrane module.

(6) A fresh water production apparatus including: a microfiltration/ultrafiltration membrane module; a semipermeable membrane unit for treating a filtrate of the microfiltration/ultrafiltration membrane module; a back-pressure washing unit for feeding water from a secondary side of the membrane module to a primary side thereof; a chlorine agent feed unit for feeding a chlorine agent to the water; and an ammoniacal compound and/or amino group-containing compound feed unit for feeding an ammoniacal compound and/or an amino group-containing compound to the primary side of the microfiltration/ultrafiltration membrane module.

(7) The fresh water production apparatus according to (6), in which the apparatus further includes an ammoniacal compound and/or amino group-containing compound feed unit for feeding an ammoniacal compound and/or an amino group-containing compound to the secondary side of the microfiltration/ultrafiltration membrane module.

(8) The fresh water production apparatus according to (6) or (7), in which the apparatus further includes a chloramine storage tank for storing a chloramine formed by a reaction of the chlorine agent and the ammoniacal compound and/or the amino group-containing compound in the water, a pipeline for connecting the secondary side of the microfiltration/ultrafiltration membrane module and the chloramine storage tank, and a pipeline for connecting the chloramine storage tank and the primary side of the semipermeable membrane unit.

Incidentally, in the present invention, the "microfiltration/ultrafiltration membrane module" and the "MF/UF membrane module" mean "at least one of the microfiltration membrane module and the ultrafiltration membrane module". Similarly, the "ammoniacal compound and/or amino group-containing compound" means "at least one of the ammoniacal compound and the amino group-containing compound".

ADVANTAGE OF THE INVENTION

According to the present invention, a MF/UF membrane module is subjected to back-pressure washing with chlorine agent-containing water, and thereafter, membrane-filtered while adding an ammoniacal compound and/or an amino group-containing compound to chlorine agent-containing water remaining in a pipeline on a secondary side of the MF/UF membrane module or in the MF/UF membrane module. The chlorine agent remaining in the MF/UF membrane module and the like can be converted to a chloramine thereby, and a semipermeable membrane unit in a subsequent stage can be sterilized. In this case, although an appropriate amount of the chloramine is present in feed water of the semipermeable membrane unit, no free chlorine is present. Accordingly, oxidation degradation of the semipermeable membrane can be prevented. Further, there is no necessity to use a reducing agent such as sodium thiosulfate or sodium hydrogen sulfite, so that the amount of neutralization waste liquid containing the chlorine agent and the reducing agent can be reduced. Furthermore, after the MF/UF membrane module has been subjected to the back-pressure washing with the chlorine agent-containing water, the chlorine agent-containing water remaining in the pipeline on the secondary side of the membrane module or in the membrane module is reused for chloramine formation, thereby being able to reduce chemical (disinfectant) cost.

BRIEF DESCRIPTION OF THE DRAWINGS

[Fig. 1] Fig. 1 is a schematic view showing one embodiment of a fresh water production apparatus of the present invention.
[Fig. 2] Fig. 2 is a schematic view showing another embodiment of a fresh water production apparatus of the present invention.

MODE FOR CARRYING OUT THE INVENTION

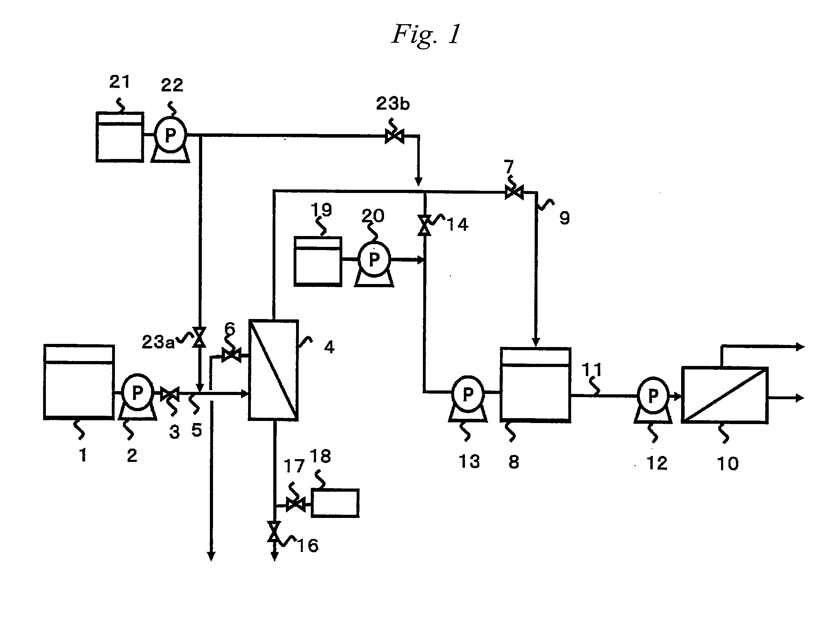

The present invention will be described in more detail below based on embodiments shown in the drawings. Incidentally, it should be understood that the present invention is not limited to the following embodiments.
The apparatus for producing fresh water according to the present invention is provided with, for example, as shown in Fig. 1, a raw water storage tank 1, a raw water feed pump 2 for feeding raw water, a raw water feed valve 3 opened at the time of feeding the raw water, a hollow fiber membrane module 4 (MF/UF membrane module) for filtering the raw water, a raw water pipeline 5 through which the raw water fed from the raw water storage tank 1 to the hollow fiber membrane module 4 passes, an air vent valve 6 opened in the case of performing back-pressure washing or air washing, a filtrate valve 7 opened at the time of filtration, a filtrate storage tank 8 for storing a hollow fiber membrane filtrate, a filtrate pipeline 9 for sending the hollow fiber membrane filtrate from the hollow fiber membrane module 4 to the filtrate storage tank 8, a semipermeable membrane unit 10 for treating the filtrate of the hollow fiber membrane module 4, a semipermeable membrane feed water pipeline 11 through which the hollow fiber membrane filtrate sent from the filtrate storage tank 8 to the semipermeable membrane unit 10 passes, a booster pump 12 for feeding the hollow fiber membrane filtrate to the semipermeable membrane unit 10, a backwash pump 13 for feeding the hollow fiber membrane filtrate to perform back-pressure washing of the hollow fiber membrane module 4, a backwash valve 14 opened at the time of the back-pressure washing, a backwash pipeline 15 through which the hollow fiber membrane filtrate fed from the filtrate storage tank 8 to the hollow fiber membrane module 4 passes, a discharging valve 16 opened in the case of discharging water on a primary side of the hollow fiber membrane module 4, an air valve 17 opened in the case of feeding compressed air to a lower portion of the hollow fiber membrane module 4 to perform air washing, a compressor 18 as a feed source of the compressed air, a chlorine agent storage tank 19 for storing a chlorine agent, a chlorine agent feed pump 20 for feeding the chlorine agent to the back-pressure washing water, an ammoniacal compound/amino group-containing compound storage tank 21 for storing an ammoniacal compound and/or an amino group-containing compound, an ammoniacal compound/amino group-containing compound feed pump 22 for feeding the ammoniacal compound and/or the amino group-containing compound to the feed water to the hollow fiber membrane module 4 and to a pipeline on a secondary side thereof, an ammoniacal compound/amino group-containing compound feed valve 23a opened in the case of adding the ammoniacal compound and/or the amino group-containing compound to the feed water of the hollow fiber membrane module 4 and an ammoniacal compound/amino group-containing compound feed valve 23b opened in the case of adding the ammoniacal compound and/or the amino group-containing compound to the pipeline on the secondary side of the hollow fiber membrane module 4.

The hollow fiber membrane module 4 may be an immersion type membrane module that is immersed in a membrane immersion tank of the raw water to perform suction filtration with a pump, a siphon or the like, in addition to the pressure type membrane module as shown in Fig. 1. Further, in the case of the pressure type membrane module, it may be an external pressure type or an internal pressure type. However, an external pressure type is preferred from the viewpoint of simple pretreatment.

A material of the membrane constituting the hollow fiber membrane module 4 is not particularly limited, as long as it is porous. However, it is preferred to contain at least one selected from the group consisting of inorganic materials such as ceramics, polyethylene, polypropylene, polyacrylonitrile, ethylene-tetrafluoroethylene copolymers, polychlorotrifluoroethylene, polytetrafluoroethylene, polyvinyl fluoride, tetrafluoroethylene-hexafluoropropylene copolymers, tetrafluoroethylene-perfluoroalkyl vinyl ether copolymers, chlorotrifluoroethylene-ethylene copolymers, polyvinylidene fluoride, polysulfone, cellulose acetate, polyvinyl alcohol, polyethersulfone and polyvinyl chloride. Further, polyvinylidene fluoride (PVDF) is more preferred in terms of membrane strength and chemical resistance, and polyacrylonitrile is more preferred in terms of high hydrophilicity and strong resistance to staining.

The surface pore diameter of the membrane constituting the hollow fiber membrane module 4 is not particularly limited, and can be expediently selected within the range of 0.001 to 10 $\mu$m. The membrane may be either the MF membrane or the UF membrane.

Further, the MF/UF membrane module may be a module using a flat membrane, a tubular membrane, a monolith membrane or the like, as well as the hollow fiber membrane module 4 shown in Fig. 1.

The filtration system in the MF/UF membrane module may be either a dead end filtration system or a cross flow filtration system. However, a dead end filtration system is preferred from the viewpoint of low energy consumption. Here, a filtration flow control method of a membrane filtration apparatus may be either constant flow filtration or constant pressure filtration. However, constant flow filtration is preferred in terms of ease of controlling the production water amount of the filtrate.

On the other hand, the semipermeable membrane in the semipermeable membrane unit 10 is a membrane having semipermeability, which allows some components in a mixed solution to be separated, for example, a solvent, to permeate and does not allow the other components to permeate, and includes a nanofiltration membrane (NF membrane) and a reverse osmosis membrane (RO membrane). As materials thereof, there have been commonly utilized polymer materials such as cellulose acetate-based polymers, polyamides, polyesters, polyimides and vinyl polymers. Further, as a membrane structure thereof, there can be appropriately used an asymmetric membrane having a dense layer on at least one surface of the membrane and having micropores having gradually larger pore sizes from the dense layer toward the inside of the membrane or toward the other surface, a composite membrane having a very thin separation function layer formed by another material, on the dense layer of the asymmetric membrane, or the like. As membrane configuration, there are a hollow fiber membrane and a flat membrane. The present invention can be conducted regardless of these membrane materials, membrane structures and membrane configuration, and all are effective. However, typical examples of the membranes include a cellulose acetate-based or polyamide-based asymmetric membrane, a composite membrane having a polyamide-based or polyurea-based separation function layer, and the like. From the viewpoints of the produced water amount, durability and salt removal ratio, it is preferred to use a cellulose acetate-based asymmetric membrane or a polyamide-based composite membrane. In particular, the present invention is more suitable for the polyamide-based semipermeable membrane in which oxidation degradation of the separation function layer is liable to occur when coming into contact with the chlorine agent.

The operation pressure of the semipermeable membrane unit 10 is preferably from 0.1 to 15 MPa, and is appropriately used depending on the kind of feed water, an operation method and the like. In the case where water having a low osmotic pressure such as brine water or ultrapure water is used as the feed water, it is used at a relatively low pressure. In the case of seawater desalination, drainage treatment, recovery of usable materials or the like, it is used at a relatively high pressure.

The semipermeable membrane unit 10 provided with the nanofiltration membrane or the reverse osmosis membrane is not particularly restricted, but in order to make handling easy, there is preferably used a unit produced by putting a hollow fiber membrane type or flat membrane type semipermeable membrane in a case to prepare a fluid separation element and mounting the element in a pressure vessel. In the case of forming with the flat membrane, the fluid separation element is generally, for example, one in which the semipermeable membrane is spirally wound around a cylindrical center pipe having many holes perforated, together with a flow passage material (net), and commercially available products thereof include reverse osmosis membrane elements TM700 Series and TM800 Series, manufactured by Toray Industries, Inc. One fluid separation element may constitute the semipermeable membrane unit, and it is also preferred to connect a plurality thereof in series or in parallel to constitute the semipermeable membrane unit.

In such a fresh water production apparatus, in a usual filtration process, the raw water stored in the raw water storage tank 1 is fed to the primary side of the hollow fiber membrane module 4 by the raw water feed pump 2 in a state where the raw water feed valve 3 is opened, and the pressure filtration of the hollow fiber membrane module 4 is performed by opening the filtrate valve 7. It is preferred that the filtration time is appropriately set depending on quality of the raw water or filtration flux. However, the filtration may be continued until reaching a predetermined transmembrane pressure.

After temporarily stored in the filtrate storage tank 8, the membrane filtrate of the hollow fiber membrane module 4 is raised in pressure by the booster pump 12, and fed to the semipermeable membrane unit 10. In the semipermeable membrane unit 10, the feed water is separated into a membrane filtrate from which solutes such as salts are removed and a concentrate in which the solutes such as the salts are concentrated.

In the present invention, for example, after the filtration operation as described above has been performed for a predetermined period of time, the filtration in the hollow fiber membrane module 4 is temporarily interrupted, and the back-pressure washing of allowing the washing water to flow back from a direction opposite to the filtration direction to the hollow fiber membrane module 4 is performed. This washing can be performed while continuing the operation of the semipermeable membrane unit 10, but the filtrate stored in the filtrate storage tank 8 shall be used for the treatment in the semipermeable membrane unit 10 during that time.

The back-pressure washing of the hollow fiber membrane module 4 is performed by stopping the raw water feed pump 2, closing the raw water feed valve 3 and the filtrate valve 7 to stop the filtration process of the hollow fiber membrane module 4, opening the air vent valve 6 and the backwash valve 14, and operating the backwash pump 13. At this time, the chlorine agent of the chlorine agent storage tank 19 is fed to backwash water by the chlorine agent feed pump 20, thereby performing the back-pressure washing of the hollow fiber membrane module 4 with chlorine agent-containing water.

The back-pressure washing of the hollow fiber membrane module 4 is performed, for example, periodically in the course of continuing the membrane filtration, and the frequency thereof is usually about once per 15 to 120 minutes.

Further, the back-pressure washing using the chlorine agent-containing water may be applied at each time of back-pressure washing. However, in order to reduce chemical costs or a risk of leaking of the chlorine agent into the semipermeable membrane unit 10 in a subsequent stage, it is not always necessary to perform in the whole backwash process. It is preferred to perform at a frequency of several times per day to about once per week.

The time of back-pressure washing of two kinds (back-pressure washing using the chlorine agent-containing water and back-pressure washing using chlorine agent-free water) is not particularly limited, but each is preferably within the range of 5 to 120 seconds. When the time of one back-pressure washing is less than 5 seconds, a sufficient washing effect is not obtained. When it exceeds 120 seconds, the operation efficiency of the hollow fiber membrane module is decreased. Although the flux of the back-pressure washing is not particularly limited, it is preferably 0.5 times or more the filtration flux. When the flux of the back-pressure washing is less than 0.5 times the filtration flux, it is difficult to sufficiently remove contaminations deposited and accumulated on a membrane surface or in pores. The higher flux of the back-pressure washing is better, because the washing effect of the membrane is enhanced. However, it is appropriately set within the range not causing damage such as breakage of the hollow fiber membrane module vessel and cracks of the membrane.

As the chlorine agent, there can be used chlorine water obtained by dissolving sodium hypochlorite, calcium hypochlorite or chlorine gas in water, or the like. Above all, sodium hypochlorite is preferred from the viewpoints of its ease of use and cost. Chlorine gas is dissolved in water to produce hypochlorous acid ($Cl_2+H_2O \rightarrow HClO+HCl$). In the case of chlorine gas, it is preferred that after liquid chlorine stored in a pressure cylinder has been surely vaporized, highly-concentrated chlorine water is produced by a metering injector and injected into the backwash water. A typical example of the metering injector is a wet vacuum injector. In the injector, a high-speed water stream is allowed to flow in the injector, and chlorine gas is sucked and mixed by a negative pressure generated in a narrowed portion thereof to produce highlt-concentrated chlorine water, which is fed to an injection point.

In the case of sodium hypochlorite, the concentration of the chlorine agent-containing water can be within the range of several to thousands of milligrams per liter. However, in the case where the washing water to which the chlorine agent has been added is held in the hollow fiber membrane module 4 as described later, it is preferably from about 50 to 1,000 mg/l. The reasons for this are that when the chlorine agent concentration is too low, the chlorine agent is all consumed while the water to which the chlorine agent has been added is held in the hollow fiber membrane module 4, resulting in a failure to sufficiently obtain the washing effect, and that when the concentration is too high, cost for treating drainage increases.

In order to enhance the washing effect, it is preferred that the chlorine agent-containing water is allowed to be held in the hollow fiber membrane module 4 for a predetermined period of time, following the back-pressure washing with the chlorine agent-containing water. The time for which the chlorine agent-containing water is allowed to be contained in the hollow fiber membrane module 4 is preferably from about 5 to 180 minutes, and more preferably from about 10 to 30 minutes. The reasons for this are that when the contact time is too short, washing power becomes weak, and that when it is too long, the apparatus is stopped for a longer period of time to cause a decrease in operation efficiency of the apparatus.

Further, in the case where fouling materials are deposited and accumulated on the membrane surface or in the pores, it is preferred that the air washing valve 17 is opened to feed compressed air of the compressor 18 to the primary side of the hollow fiber membrane module 4, thereby performing air washing in which the membrane is vibrated. The air washing is preferably performed during, before or after performing the back-pressure washing of two kinds described above, or at least at one time during the period of time for which the chlorine agent-containing water is allowed to be held in the hollow fiber membrane module 4. The water extruded to the primary side of the hollow fiber membrane module 4 and the air fed from the lower portion of the hollow fiber membrane module 4 is discharged to the outside of the system through the air vent valve 6. In this case, the higher pressure of the compressed air is better, because the washing effect of the membrane is enhanced. However, it is appropriately set within the range not damaging the membrane.

After the hollow fiber membrane module 4 has been subjected to the back-pressure washing with the washing water to which the chlorine agent has been added, the chlorine agent remains in the hollow fiber membrane module 4 or in the pipeline on the secondary side of the hollow fiber membrane module 4. The residual chlorine agent is present in water in a form of free chlorine. The free chlorine means a chlorine compound in which the chlorine agent is present as hypochlorous acid (HClO) or a hypochlorite ion (ClO$^-$), which is produced by a reaction of the chlorine agent with water, and has strong sterilizing power and oxidizing power. Therefore, when usual filtration is resumed as such after the back-pressure washing with the chlorine agent-containing water, the free chlorine flows into the semipermeable membrane unit 10 in the subsequent stage to cause a concern that oxidation degradation of the semipermeable membrane will occur. When the semipermeable membrane is oxidized and degraded by the free chlorine, the quality of the permeated water obtained from the semipermeable membrane is also deteriorated.

In the present invention, therefore, the ammoniacal compound and/or the amino group-containing compound are added to the primary side of the MF/UF membrane module, and then, the membrane filtration is resumed. By doing so, the free chlorine is reacted with the ammoniacal compound and/or the amino group-containing compound to be converted to combined chlorine, namely a chloramine. The semipermeable membrane can be sterilized by the chloramine while preventing degradation and damage thereof.

For example, in the embodiment shown in Fig. 1, after the back-pressure washing of the hollow fiber membrane module 4 has been terminated, the filtration in the hollow fiber membrane module 4 is resumed while adding the ammoniacal compound and/or the amino group-containing compound to the raw water. More specifically, after the back-pressure washing and the air washing have been terminated, the air washing valve 17 is closed, and the discharging valve 16 is opened, thereby performing a drainage process for discharging the fouling materials separated from the membrane surface and the inside of the pores and floating in the hollow fiber membrane module 4 to the outside of the system. After the termination of the drainage process, the discharging valve 16 is closed, and the raw water feed valve 3 and the ammoniacal compound/amino group-containing compound feed valve 23a are opened. The raw water pump 2 and the ammoniacal compound/amino group-containing compound feed pump 22 are actuated to perform a water feed process. Then, after the primary side of the hollow fiber membrane module 4 has been filled to the upper limit with the water, the air vent valve 6 is closed and the filtrate valve 7 is opened to resume the filtration process. After the filtration for a predetermined period of time, the ammoniacal compound/amino group-containing compound feed valve 23a is closed, and the ammoniacal compound/amino group-containing compound feed pump 22 is turned off, thereby returning to the usual filtration process (filtration process in which the ammoniacal compound and/or the amino group-containing compound are not added). Thus, the above-mentioned processes are repeated.

By doing as described above, the chlorine agent that has been present in the hollow fiber membrane module 4 is converted to the chloramine, and the fouling materials of the semipermeable membrane unit 10 can be decomposed and removed while preventing degradation and damage of the semipermeable membrane in the subsequent stage. Incidentally, the sterilizing power of the chloramine is about one-tenth compared with that of the free chlorine, and adverse effects thereof on the semipermeable membrane is also far smaller than those of the free chlorine.

The chloramines are roughly classified into an inorganic chloramine and an organic chloramine. The former is formed by a reaction of the ammoniacal compound with chlorine, and the latter is formed by a reaction of the amino group-containing compound with chlorine.

For example, when the ammoniacal compound and the free chlorine in water react with each other, monochloramine ($NH_2Cl$), dichloramine ($NHCl_2$) and trichloramine ($NCl_3$) are formed according to the following equations:

$$[Chem. 1] \quad NH_3+HOI \rightarrow NH_2Cl+H_2O \quad NH2Cl+HOCl \rightarrow NHCl_2+H_2O \quad NHCl_2+HOCl \rightarrow NCl_3+H_2O$$

Dichloramine is stronger in sterilizing power than monochloramine, and trichloramine has no sterilizing power. The formation ratio of these chloramines varies under influences such as the concentration of the free chlorine, the concentration of the ammoniacal compound, and the kind and pH thereof.

For example, when the pH is less than 7.5, the formation ratio of dichloramine increases, and when the pH is within the range of 7.5 to 8.5, almost all become monochloramine. Accordingly, the pH at the time of the reaction is preferably within the range of 7.5 to 8.5, and more preferably within the range of 8.0 to 8.5. As a pH adjuster, there is generally used sulfuric acid, sodium hydroxide or calcium hydroxide. However, there can also be used hydrochloric acid, oxalic acid, potassium hydroxide, sodium bicarbonate or the like.

A decrease in the residual chlorine concentration is observed from the point of time when the ammoniacal compound is added to the residual chlorine so that "$NH_3/Cl_2$ (weight ratio)" becomes 1/5 to 1/4 times. It is therefore preferred that the ammoniacal compound is added so that "$NH_3/Cl_2$ (weight ratio)" becomes 1/5 times or less. Further, when "$NH_3/Cl_2$ (weight ratio)" becomes less than 1/9 times, trichloramine having no sterilizing power is formed. It is therefore more preferred that the ammoniacal compound is added so that "$NH_3/Cl_2$ (weight ratio)" becomes 1/9 to 1/5 times.

The ammoniacal compound means a compound having an ammonium ion, and preferred examples thereof include ammonium sulfate, ammonium chloride and aqueous ammonia. Above all, ammonium sulfate that is a typical nitrogen fertilizer is easily available and more preferred.

The amino group ($-NH_2$)-containing compound means an amine that is a compound in which one or more hydrogen atoms of ammonia are substituted with hydrocarbon groups, and an amino acid that is a compound having both functional groups of an amino group ($-NH_2$) and a carboxyl group ($-COOH$). The amine as the amino group-containing compound includes a primary amine in which one hydrogen atom of ammonia is substituted with a hydrocarbon group, a secondary amine in which two are substituted, and a tertiary amine in which three are substituted. It is known that reactable with the free chlorine to form the chloramine is the primary or secondary amine. As a suitable example of the amine, the primary or secondary amine is preferred, and the amine such as methylamine that forms the stable chloramine and does not cause a breakpoint reaction is more preferred. Suitable examples of the amino acids include taurine, glycine, alanine, glutamic acid, aspartic acid, sulfamic acid, serine, threonine, tyrosine and hydroxyproline. Above all, taurine, glycine, alanine, glutamic acid and aspartic acid, which have hitherto been used as agents for removing free chlorine in water, are more preferred.

In order to efficiently consume the chlorine agent in the pipeline on the secondary side of the hollow fiber membrane module 4, it is preferred to open also the ammoniacal compound/amino group-containing compound feed valve 23b before or at the same time as the raw water feed valve 3 and the ammoniacal compound/amino group-containing compound feed valve 23a are opened. By doing so, the ammoniacal compound/amino group-containing compound are surely fed into the pipeline on the secondary side of the hollow fiber membrane module 4 at the point of time when the filtration process in the hollow fiber membrane module 4 is resumed, so that the chlorine agent in the pipeline on the secondary side can be efficiently consumed.

Further, in the case where the washing water to which the chlorine agent has been added is allowed to be held in the hollow fiber membrane module 4 after the back-pressure washing, it is more preferred that the ammoniacal compound/amino group-containing compound feed valve 23b is opened, and that the ammoniacal compound/amino group-containing compound feed pump 22 is actuated, while the chlorine agent-containing water is held for a predetermined period of time, thereby reacting the residual free chlorine in the pipeline on the secondary side with the ammoniacal compound and/or the amino group-containing compound.

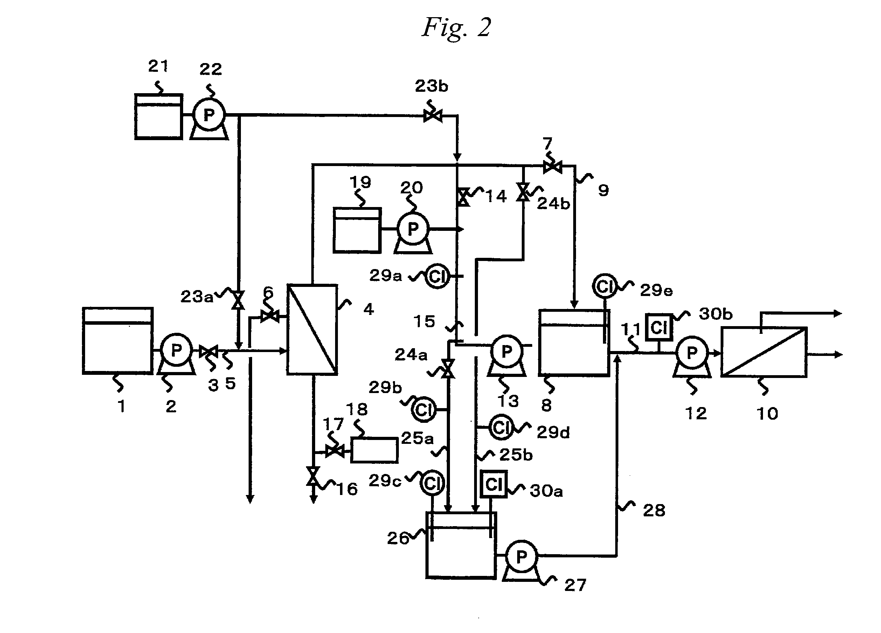

Furthermore, in Fig. 1, mixed water of the chlorine agent remaining in the hollow fiber membrane module 4 and in the pipeline on the secondary side and the water containing the ammoniacal compound and/or the amino group-containing compound is directly fed to the filtrate storage tank 8. However, as exemplified in Fig. 2, it is also preferred to provide a chloramine storage tank 26 between the hollow fiber membrane module 4 and the semipermeable membrane unit 10, for the purpose of sufficiently reacting the chlorine agent with the water containing the ammoniacal compound and/or the amino group-containing compound. Incidentally, the chloramine storage tank 26 is connected to the filtrate pipeline 9 corresponding to the secondary side of the hollow fiber membrane module 4 and the backwash pipeline 15 through a bypass line 25a and a bypass line 25b, respectively, and connected to a primary side of the semipermeable membrane unit 10 through a chloramine feed pipeline 28.

Specifically, the filtrate valve 7 is closed, and a bypass line valves 24a and/or 25b are opened to allow the mixed water of the chlorine agent and the water containing the ammoniacal compound and/or the amino group-containing compound to be stored once in the chloramine storage tank 26 through the bypass lines 25a and/or 25b, thereby sufficiently reacting the residual free chlorine with the ammoniacal compound and/or the amino group-containing compound. Thereafter, using a chloramine feed pump 27, the chloramine is fed from the chloramine storage tank 26 to the semipermeable membrane feed water pipeline 11 through the chloramine feed pipeline 28.

Incidentally, in introducing the mixed water of the chlorine agent and the water containing the ammoniacal compound and/or the amino group-containing compound to the chloramine storage tank 26, at least one of the bypass line 25a branched from the filtrate pipeline 9 and the bypass line 25b branched from the backwash pipeline 15 may be selected and used. However, it is preferred to feed the above-mentioned mixed water at least from the bypass line 25b branched from the backwash pipeline 15 in which the residual free chlorine concentration is liable to become high to the chloramine storage tank 22.

Further, sewage, agricultural drainage or the like or treated water thereof may be added as an alternative for the ammoniacal compound and/or the amino group-containing compound. However, in the case where the treated water is added to the pipeline on the secondary side, in order to prevent suspended matter from flowing into the semipermeable membrane unit in the subsequent stage, a membrane filtrate obtained by subjecting sewage, agricultural drainage or the like, or treated water thereof to MF/UF membrane filtration is preferred. From the viewpoint of reuse, a concentrate generated at the time when the above-mentioned MF/UF membrane filtrate is treated by the semipermeable membrane unit is more preferred.

Gas such as ammonia gas may be blown into the lower portion of the hollow fiber membrane module 4 instead of air.

Incidentally, a DPD method, an electrical current method, an absorption spectrophotometric method and the like are used for measurement of the chloramine concentration and the free chlorine concentration. The chloramine concentration can be determined by determining the total chlorine concentration that is a combined concentration of the chloramine concentration and the free chlorine concentration and subtracting the free chlorine concentration from that concentration. For example, water sampling is performed from the semipermeable membrane feed water pipeline 11, and the total chlorine concentration and the free chlorine concentration can be measured by the DPD method and the electrical current method under usual measurement conditions, or the total chlorine and free chlorine concentrations can be measured by a continuous automatic measuring instrument using the absorption spectrophotometric method.

In the case of the continuous automatic measuring instrument, the free chlorine concentration and the chloramine concentration are monitored to take action so as to be maintained within given ranges by measuring the free chlorine concentration using, for example, a free chlorine densitometer 29a mounted in the filtrate storage tank 8, a free chlorine densitometer 29b mounted in the filtrate pipeline 9, a free chlorine densitometer 29c mounted in the semipermeable membrane feed water pipeline 11, a free chlorine densitometer 29d mounted in the backwash pipeline 15, a free chlorine densitometer 29e mounted in a bypass line 25a branched from the filtrate pipeline 9, a free chlorine densitometer 29f mounted in the bypass line 25b branched from the backwash pipeline 15, a free chlorine densitometer 29g mounted in the chloramine storage tank 26 and the like, and measuring the chloramine concentration using a chloramine densitometer 30a mounted in the semipermeable membrane feed water pipeline 11 and a chloramine densitometer 30b mounted in the chloramine storage tank 26.

When the free chlorine concentration in the semipermeable membrane feed water is higher than 0.01 mg/l, there is a concern of oxidation degradation of the semipermeable membrane. Further, it is preferred that the chloramine concentration in the semipermeable membrane feed water is adjusted to 0.01 to 5 mg/l. When the chloramine concentration is less than 0.01 mg/l, biofouling cannot be sufficiently inhibited, and when the chloramine concentration is higher than 5 mg/l, there is a concern of oxidation degradation of the semipermeable membrane. A method for adding the chloramine to the semipermeable membrane feed water may be either continuous addition or intermittent addition.

EXAMPLES

The present invention will be described below with reference to specific examples, but the present invention is not construed as being limited by these examples in any way.

<Transmembrane Pressure>

For each of the hollow fiber membrane module and the semipermeable membrane unit, a pressure gauge was mounted on each of a membrane feed water side and a membrane filtrate side, and calculation was made by subtracting the pressure on the membrane filtrate side from the pressure on the feed water side.

<Desalination ratio>

The electric conductivity of the membrane feed water of the semipermeable membrane unit and the electric conductivity of the membrane filtrate were measured, and the desalination ratio was calculated according to the following equation:

$$\text{Desalination ratio (TDS removal ratio) (\%)} = \{1-(\text{electric conductivity (TDS}$$
$$\text{concentration) of membrane filtrte} \cdot \text{electric conductivity} \cdot \text{(TDS concentration) of}$$
$$\text{membrane feed water})\} \times 100$$

<Recovery Ratio>

The recovery ratio in the hollow fiber membrane module was calculated from the amount of feed water to the hollow fiber membrane module, the amount of the filtrate obtained from the hollow fiber membrane module and the drainage amount of the hollow fiber membrane module. Further, the recovery ratio in the semipermeable membrane unit was calculated from the amount of feed water to the semipermeable membrane unit, the amount of the filtrate obtained from the semipermeable membrane unit and the amount of concentrate.

<Example 1>

Fresh water was produced using an apparatus having the constitution shown in Fig. 1.
That is to say, as the hollow fiber membrane module 4, there was used one pressure type hollow fiber membrane module (HFU-2020) with a hollow fiber UF membrane made of polyvinyl fluoride having a molecular weight cut-off of 150,000 Da and with a membrane area of 72 m$^2$, manufactured by Toray Industries, Inc., and the raw water feed valve 3 and the filtrate valve 7 were opened. The raw water feed pump 2 was actuated, and seawater with a turbidity of 4 degrees, a TOC (Total Organic Carbon) concentration of 2 mg/l and a salt concentration of 3.5% was subjected to dead end filtration at a filtration flux of 3 m/d. Further, as the semipermeable membrane unit 10, there were used four polyamide-based reverse osmosis membrane elements (TM820-400) manufactured by Toray Industries, Inc., and filtration was performed at a membrane filtration flow rate of 60 m$^3$/d, a condensate flow rate of 120 m$^3$/d and a recovery ratio of 33%.
During this period, filtration with the hollow fiber membrane module 4 was once interrupted after continuous filtration for 30 minutes (filtration with the semipermeable membrane unit 10 was continued), and back-pressure washing was performed using chlorine agent-containing water obtained by adding sodium hypochlorite in the chlorine agent storage tank 19 to a membrane filtrate of the hollow fiber membrane module 4. Specifically, the raw water feed valve 3 and the filtrate valve 7 were closed, and the raw water feed pump 2 was stopped. At the same time, the backwash valve 14, the air washing valve 17 and the air vent valve 6 were opened, and the backwash pump 13 and the chlorine agent feed pump 20 were actuated to concurrently perform back-pressure washing at a filtration flux of 3.3 m/d and air washing of feeding air at 100 l/min (0°C, 1 atm.) from the lower portion of the hollow fiber membrane module, for 1 minute. The free chlorine concentration in the back-pressure washing water at this time was adjusted to 10 mg/l.
Thereafter, the discharging valve 16 was opened, and water in the hollow fiber membrane module 4 was all discharged to the outside of the system.
Then, the discharging valve 16 was closed, and the raw water feed valve 3 and the ammoniacal compound/amino group-containing compound feed valve 23a were opened. The raw water feed pump 2 and the ammoniacal compound/amino group-containing compound feed pump 22 were actuated to feed the raw water into the hollow fiber membrane module 4 while adding ammonium chloride to the raw water. Thereafter, the filtrate valve 7 was opened, and the air vent valve 6 was closed to perform dead end filtration for 30 seconds. At this time, ammonium chloride in the raw water was adjusted to 2 mg/l.
Thereafter, the ammoniacal compound/amino group-containing compound feed pump 22 was stopped, and the ammoniacal compound/amino group-containing compound feed valve 23a was closed to return to the usual filtration process. Thus, the above-mentioned processes were repeated.

As a result, the hollow fiber membrane module 4 showed a transmembrane pressure of about 55 kPa after 2 months, compared with 35 kPa immediately after the start of operation, and was relatively stably operated, so that there was no necessity of chemical washing. Further, the semipermeable membrane unit 10 was changed in desalination ratio as stably as 99.6% after 2 months, compared with 99.7% immediately after the start of operation. The transmembrane pressure of the semipermeable membrane unit 10 was as stable as about 120 kPa after 2 months, compared with 100 kPa immediately after the start of operation.

<Example 2>

Instead of ammonium chloride in Example 1, taunine as an amino group-containing compound was added in the raw water to 2.5 wt%, followed by feeding to the semipermeable membrane unit 10. Except for that, Example 2 was performed in the same manner as in Example 1.

As a result, the hollow fiber membrane module 4 showed a transmembrane pressure of about 65 kPa after 2 months, compared with 35 kPa immediately after the start of operation, and was relatively stably operated, so that there was no necessity of chemical washing. Further, the semipermeable membrane unit 10 was changed in desalination ratio as stably as 99.4% after 2 months, compared with 99.7% immediately after the start of operation. The transmembrane pressure of the semipermeable membrane unit 10 was as stable as about 130 kPa after 2 months, compared with 100 kPa immediately after the start of operation.

<Example 3>

Example 3 was performed in the same manner as in Example 1 except that one out of 24 processes returning from the back-pressure washing process to the usual filtration process in Example 1 was performed as the following "process a", and that the remaining 23 processes was performed as the following "process b".

[Process a]

(a-1) Back-pressure washing using chlorine agent-containing water obtained by adding sodium hypochlorite in the chlorine agent storage tank 19 to the membrane filtrate of the hollow fiber membrane module 4 was performed concurrently with air washing for 1 minute. Thereafter, the hollow fiber membrane module 4 was immersed in the chlorine agent-containing water for 20 minutes. The free chlorine concentration in the back-pressure washing water at this time was adjusted to 100 mg/l.

(a-2) Thereafter, the discharging valve 16 was opened, and the chlorine-containing water in the hollow fiber membrane module 4 was all discharged.

(a-3) Then, in order to wash out the chlorine-containing water in the hollow fiber membrane module 4 and the pipeline on the secondary side (filtrate side), the discharging valve 16 was closed, and back-pressure washing using the sodium hypochlorite-free membrane filtrate of the hollow fiber membrane module 4 was performed for 1 minute. The discharging valve 16 was opened again, and rinse water was all discharged.

(a-4) Thereafter, the discharging valve 16 was closed, and the raw water feed valve 3 and the ammoniacal compound/amino group-containing compound feed valve 23a were opened. The raw water feed pump 2 and the ammoniacal compound/amino group-containing compound feed pump 22 were actuated to feed the raw water into the hollow fiber membrane module 4 while adding ammonium chloride to the raw water. Then, the filtrate valve 7 was opened, and the air vent valve 6 was closed to perform dead end filtration for 30 seconds. At this time, ammonium chloride in the raw water was adjusted to 20 mg/l.

(a-5) Then, the ammoniacal compound/amino group-containing compound feed pump 22 was stopped, and the ammoniacal compound/amino group-containing compound feed valve 23a was closed to return to the usual filtration process.

[Process b]

(b-1) After the back-pressure washing using the sodium hypochlorite-free membrane filtrate of the hollow fiber membrane module 4 was performed concurrently with air washing for 1 minute, the discharging valve 16 was opened, and water in the hollow fiber membrane module 4 was all discharged to the outside of the system.

(b-2) Thereafter, the discharging valve 16 was closed to return to the usual filtration process.

As a result of fresh water production as described above, the hollow fiber membrane module 4 showed a recovery ratio of 94.2%. Further, the hollow fiber membrane module 4 showed a transmembrane pressure of about 55 kPa after 2 months, compared with 35 kPa immediately after the start of operation, and was relatively stably operated, so that there was no necessity of chemical washing. Furthermore, the semipermeable membrane unit 10 was changed in desalination ratio as stably as 99.6% after 2 months, compared with 99.7% immediately after the start of operation. The transmembrane pressure of the semipermeable membrane unit 10 was as stable as about 120 kPa after 2 months, compared with 100 kPa immediately after the start of operation.

<Comparative Example 1>

Comparative Example 1 was performed in the same manner as in Example 1 except that ammonium chloride was not added to the raw water after the backwashing with the chlorine agent-containing water.

As a result, the hollow fiber membrane module 4 showed a transmembrane pressure of about 75 kPa after 2 months, compared with 35 kPa immediately after the start of operation, and was relatively stably operated, so that there was no necessity of chemical washing. However, the semipermeable membrane unit 10 was decreased in desalination ratio to 95.3% after 2 months, compared with 99.7% immediately after the start of operation. Compared with Example 1, the desalination ratio was decreased because of oxidation degradation due to leakage of the residual free chlorine.

<Comparative Example 2>

Comparative Example 2 was performed in the same manner as in Comparative Example 1 except that after the backwashing with the chlorine agent-containing water, sodium hypochlorite was added to semipermeable membrane feed water to perform neutralization by reduction, followed by feeding to the semipermeable membrane unit 10, in order to prevent the oxidation degradation due to the leakage of the residual free chlorine in Comparative Example 1.

As a result, the hollow fiber membrane module 4 showed a transmembrane pressure of about 75 kPa after 2 months, compared with 35 kPa immediately after the start of operation, and was relatively stably operated, so that there was no necessity of chemical washing. The semipermeable membrane unit 10 was changed in desalination ratio as stably as 99.6% after 2 months, compared with 99.7% immediately after the start of operation. However, the semipermeable membrane unit 10 was increased in transmembrane pressure as high as about 180 kPa after 2 months, compared with 100 kPa immediately after the start of operation, so that chemical washing was forced to be performed. Compared with Example 1, biofouling occurred, and the transmembrane pressure was increased.

<Comparative Example 3>

Comparative Example 3 was performed in the same manner as in Example 3 except that in "process a" of Example 3, (a-4) was not performed, and instead, (a-3) was repeated 5 times.

As a result, the hollow fiber membrane module 4 showed a transmembrane pressure of about 55 kPa after 2 months, compared with 35 kPa immediately after the start of operation, and was relatively stably operated, so that there was no necessity of chemical washing. However, the recovery ratio was as low as 93.6%, compared with Example 3, which caused an increase in wash drainage. Further, the semipermeable membrane unit 10 was changed in desalination ratio as stably as 99.6% after 2 months, compared with 99.7% immediately after the start of operation. However, the transmembrane pressure was increased as high as about 180 kPa after 2 months, compared with 100 kPa immediately after the start of operation, so that chemical washing was forced to be performed. That is to say, compared with Example 3, biofouling occurred, and the transmembrane pressure was increased.

INDUSTRIAL APPLICABILITY

According to the present invention, oxidation degradation of semipermeable membranes and biofouling growth are prevented, and it is also possible to improve the water recovery ratio, associated with a decrease in the amount of neutralization waste liquid. The present invention is therefore suitable for use in seawater desalination, industrial drainage and sewage reuse.

DESCRIPTION OF REFERENCE NUMERALS AND SIGNS

1: Raw water storage tank
2: Raw water feed pump
3: Raw water feed valve
4: Hollow fiber membrane module

5: Raw water pipeline
6: Air vent valve
7: Filtrate valve
8: Filtrate storage valve
9: Filtrate pipeline
10: Semipermeable membrane unit
11: Semipermeable membrane feed water pipeline
12: Booster pump
13: Backwash pump
14: Backwash valve
15: Backwash pipeline
16: Discharging valve
17: Air valve
18: Compressor
19: Chlorine agent storage tank
20: Chlorine agent feed pump
21: Ammoniacal compound/amino group-containing compound storage tank
22: Ammoniacal compound/amino group-containing compound feed pump
23a and 23b: Ammoniacal compound/amino group-containing compound feed valve
24a and 24b: Bypass line valve
25a and 25b: Bypass line
26: Chloramine storage tank
27: Chloramine feed pump
28: Chloramine feed pipeline
29a, 29b, 29c, 29d, 29e, 29f and 29g: Free chlorine densitometer
30a and 30b: Chloramine densitometer

**Claims**

1. A fresh water production method comprising membrane-filtering raw water with a microfiltration/ultrafiltration membrane module, followed by performing membrane filtration with a semipermeable membrane unit, wherein the membrane filtration in the microfiltration/ultrafiltration membrane module is temporarily interrupted, chlorine agent-containing water is fed from a secondary side of the microfiltration/ultrafiltration membrane module to perform back-pressure washing of the microfiltration/ultrafiltration membrane module, thereafter, an ammoniacal compound and/or an amino group-containing compound are added to a primary side of the microfiltration/ultrafiltration membrane module, and the membrane filtration in the microfiltration/ultrafiltration membrane module is resumed.

2. The fresh water production method according to claim 1, wherein after the back-pressure washing with the chlorine agent-containing water is performed, before or at the same time as the ammoniacal compound and/or the amino group-containing compound are added to the primary side of the microfiltration/ultrafiltration membrane module, an ammoniacal compound and/or an amino group-containing compound are added to the secondary side of the microfiltration/ultrafiltration membrane module, and the membrane filtration in the microfiltration/ultrafiltration membrane module is resumed.

3. The fresh water production method according to claim 1 or 2, wherein after the back-pressure washing with the chlorine agent-containing water is performed, and before the ammoniacal compound and/or the amino group-containing compound are added to the primary or secondary side of the microfiltration/ultrafiltration membrane module, the microfiltration/ultrafiltration membrane module is subjected to back-pressure washing with a membrane filtrate.

4. The fresh water production method according to any one of claims 1 to 3, wherein after the back-pressure washing with the chlorine agent-containing water is performed, the chlorine agent-containing water is subsequently held in the microfiltration/ultrafiltration membrane module for a predetermined period of time.

5. The fresh water production method according to any one of claims 1 to 4, wherein air washing is performed during, before or after performing the back-pressure washing with the chlorine agent-containing water, or at least at one time during the period of time for which the chlorine agent-containing water is held in the microfiltration/ultrafiltration membrane module.

6. A fresh water production apparatus comprising: a microfiltration/ultrafiltration membrane module; a semipermeable membrane unit for treating a filtrate of the microfiltration/ultrafiltration membrane module; a back-pressure washing unit for feeding water from a secondary side of the membrane module to a primary side thereof; a chlorine agent feed unit for feeding a chlorine agent to the water; and an ammoniacal compound and/or amino group-containing compound feed unit for feeding an ammoniacal compound and/or an amino group-containing compound to the primary side of the microfiltration/ultrafiltration membrane module.

7. The fresh water production apparatus according to claim 6, wherein the apparatus further comprises an ammoniacal compound and/or amino group-containing compound feed unit for feeding an ammoniacal compound and/or an amino group-containing compound to the secondary side of the microfiltration/ultrafiltration membrane module.

8. The fresh water production apparatus according to claim 6 or 7, wherein the apparatus further comprises a chloramine storage tank for storing a chloramine formed by a reaction of the chlorine agent and the ammoniacal compound and/or the amino group-containing compound in the water, a pipeline for connecting the secondary side of the microfiltration/ultrafiltration membrane module and the chloramine storage tank, and a pipeline for connecting the chloramine storage tank and the primary side of the semipermeable membrane unit.

*Fig. 1*

*Fig. 2*

## INTERNATIONAL SEARCH REPORT

| | International application No. |
|---|---|
| | PCT/JP2011/074639 |

**A. CLASSIFICATION OF SUBJECT MATTER**
*B01D65/06*(2006.01)i, *B01D61/58*(2006.01)i, *B01D65/02*(2006.01)i, *C02F1/44* (2006.01)i

According to International Patent Classification (IPC) or to both national classification and IPC

**B. FIELDS SEARCHED**

Minimum documentation searched (classification system followed by classification symbols)
B01D65/06, B01D61/58, B01D65/02, C02F1/44

Documentation searched other than minimum documentation to the extent that such documents are included in the fields searched
| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-183510 A (Toray Industries, Inc.), 14 August 2008 (14.08.2008), paragraphs [0059], [0060]; fig. 2 (Family: none) | 1,3-6 |
| A | JP 6-98277 B2 (Kurita Water Industries Ltd.), 07 December 1994 (07.12.1994), claim 1 (Family: none) | 1-8 |
| A | JP 63-100998 A (Toray Industries, Inc.), 06 May 1988 (06.05.1988), page 3, upper left column, lines 3 to 8 (Family: none) | 1-8 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 January, 2012 (23.01.12) | 31 January, 2012 (31.01.12) |

| Name and mailing address of the ISA/ Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001079366 A
- JP 2006305444 A
- JP 2008029906 A

- JP 3380114 B
- JP 59213495 A

**Non-patent literature cited in the description**

- Present Situation and Future Problems of Membranes for Effective Utilization Systems of Water Resources. **HIROYUKI YAMAMURA.** Membrane. The Membrane Society of Japan, vol. 28, 235